# DEMANDE DE BREVET EUROPEEN

(11) **EP 4 530 127 A1**
(43) Date de publication de la demande: **02.04.2025**
(21) Numéro de dépôt: 24198445.9
(22) Date de dépôt: 04.09.2024
(51) Int. Cl.: B60N 2/70, B60N 2/72, B60N 2/68

(54) **COUSSIN MODULAIRE D ASSISE, ET ENSEMBLE DE SIÈGE COMPRENANT UN TEL COUSSIN**

(30) Priorité: 29.09.2023 FR 2310419
(71) Demandeur: FAURECIA Sièges d'Automobile, 92000 Nanterre (FR)
(72) Inventeur: DURIEZ, Didier, 91220 Le Plessis-Pâté (FR); MICHAUD, Marine, 75006 Paris (FR); DAGONET, Thomas, 78000 Versailles (FR)
(74) Mandataire: Plasseraud IP

(57) **Abrégé**

La présente divulgation est relative à un coussin modulaire d'assise (CM), configuré pour être fixé à une structure de siège (2) présentant une structure d'assise comprenant deux flasques latéraux (20) entretoisés par un tube avant (23), transversal, et un tube arrière (22), transversal,
ledit coussin modulaire d'assise comprenant à l'état assemblé:
- un support ,
- une matelassure reposant sur une surface supérieure du support, e.
- un revêtement d'habillage recouvrant la matelassure,

et dans lequel ledit système d'interface mécanique comprend :
- une interface mécanique arrière (16), sur une portion arrière du support (S), comprenant un premier logement (LG1), ouvert, configuré pour loger le tube arrière (22) de manière verrouillable mécaniquement par un système de verrouillage,
- une interface mécanique avant (17), sur une partie avant dudit support comprenant un deuxième logement (LG2), ouvert, configuré pour loger le tube avant (23) de manière pivotable autour dudit tube avant (23).

## Description

La présente divulgation est relative à un coussin modulaire d'assise, configuré pour être fixé à une structure de siège présentant une structure d'assise, ainsi qu'à un ensemble de siège comprenant une structure de siège présentant une structure d'assise et un tel coussin modulaire d'assise selon la présente divulgation, ladite structure d'assise présentant deux flasques latéraux entretoisés par un tube avant, transversal, et un tube arrière, transversal.

La présente divulgation concerne encore un procédé d'obtention d'un ensemble de siège selon la présente divulgation

### Domaine technique

La présente divulgation relève du domaine des siège de véhicule.

### Technique antérieure

L'état de la technique des sièges des véhicules, connait une conception de siège qui nécessite d'assembler les différents composants du siège en un site, typiquement selon une fabrication juste à temps connue sous l'abréviation anglaise « *JIT* » pour « *Just-In Time manufacturing* »*.*

La structure du siège comprend une structure de siège typiquement métallique qui comprend classiquement une structure d'assise et une structure de dossier.

La structure de siège peut comporter :
- deux glissières, droite et gauche, comprenant chacune un profilé inférieur, typiquement femelle, fixe par rapport à un plancher, et un profilé supérieur, mâle, monté coulissant par rapport au profilé inférieur, typiquement suivant une direction X qui peut être la direction d'avance du véhicule,
- une structure d'assise qui comprend classiquement deux flasques, droite et gauche, entretoisés par des tubes, et en particulier un tube avant entretoisant les flasques, sur une portion avant de la structure d'assise et un tube arrière entretoisant les flasques sur une portion arrière de la structure d'assise, les tubes avant et arrière s'étendant de manière parallèle, suivant une direction transversale,
- une pièce de nez, métallique qui relie des extrémités avant des flasques et est conformée pour former une surface de support pour le soutien du coussin d'assise.

La hauteur de la structure d'assise, à savoir de l'ensemble qui comprend les flasques et la pièce de nez peut être typiquement réglée par un système de réhausse qui peut comprendre une paire de biellettes avant, droite et gauche, reliant le tube avant et les profilés supérieurs des glissières droite et gauche, et une paire de biellettes arrière, droite et gauche, reliant le tube arrière et les profilés supérieurs des glissières, droite et gauche.

L'assise d'un tel siège comprend encore un système de suspension typiquement à fils ressorts, reliant la pièce de nez, à une partie arrière de la structure assise, mais encore, une matelassure d'assise, typiquement en mousse polyuréthane expansée, et un revêtement d'habillage venant recouvrir la matelassure en mousse.

En fonction des options qui peuvent être choisies par l'utilisateur final, différents équipements de confort peuvent être prévus, tels que notamment une nappe chauffante résistive, un système de massage, ou encore un système de ventilation, voire un mécanisme de coulissement venant se fixer au-dessus de la pièce de nez de sorte à pouvoir régler l'avancement d'une partie avant du coussin, et par rapport à une portion arrière du coussin, fixe.

Une conception d'un siège nécessite d'assembler, typiquement manuellement, un grand nombre de composants sur le site d'assemblage final du véhicule, ce qui peut ne pas être optimal économiquement lorsque le site d'assemblage dispose d'une main d'oeuvre à cout élevé.

Les sièges modernes, en particulier des véhicules automobiles de finitions supérieures, peuvent être équipés de fonctions supplémentaires, telles qu'une fonction de chauffage, de massage, ou de ventilation.

Ces équipements sont intégrés en usine lors de la fabrication du siège, puis surmontés des coussins avec leur matelassure et revêtements. Le siège ainsi assemblé est ensuite fixé au plancher du véhicule.

Dans les véhicules automobiles équipés de tels sièges, et lorsque le siège n'est pas pourvu dès l'origine d'un tel équipement de confort, la conception des sièges connus de l'état de la technique ne permet pas de démonter le siège au sein même du véhicule, c'est dire sans démonter le siège du plancher du véhicule, en vue de procéder à l'amélioration du siège par l'ajout d'une fonction supplémentaire de chauffage, de ventilation, ou de massage. En effet, l'ajout d'un tel équipement nécessiterait de sortir le siège du véhicule pour retirer les revêtements et la matelassure, ce retrait étant nécessaire à un tel ajout.

On connait toutefois par exemple du document US 9,796,310 B1 d'autres fabrications de siège qui comprennent le pré-assemblage, typiquement sur un site distinct du site d'assemblage final du véhicule, d'un module, et en particulier un coussin modulaire d'assise. Ce coussin modulaire comprend, à l'état assemblé, une base, une matelassure et un revêtement d'habillage. Il peut être typiquement transporté jusqu'au site d'assemblage final en vue de son assemblage sur la structure.

De manière notable, et dans le document US 9,796,310 B1 une pièce de nez de la base, composite est articulée à un corps de base, autour d'un axe transversal du siège, la pièce de nez comprenant un ensemble de crochet venant se fixer sur le tube avant. La pièce de nez et le corps de base sont deux pièces unitaires, typiquement moulées par injection, nécessitant deux moules d'injection. Le corps de base supporte une suspension métallique à fil ressort. Selon US 9 796 310, en cas d'impact frontal, la rotation possible entre la pièce de nez et la base participe à la dissipation de l'énergie lors de l'impact, et supporte favorablement les hanches afin d'éviter un sous marinage.

Une telle solution repose donc sur un glissement possible entre le corps de base, et la structure d'assise, en cas de crash, de manière à engendrer la rotation relative entre la pièce de nez et le corps de base, à savoir que la reprise des efforts en cas de crash se répercute uniquement sur le tube avant de la structure d'assise.

Si Selon les constatations des inventeurs, une telle solution de coussin modulaire améliorée en cas de crash frontal, il s'agit d'une solution couteuse, en particulier en ce qu'elle nécessite trois pièces distinctes (à savoir la pièce de nez, le corps de base, articulé à la pièce de nez, et la suspension métallique) pour former ladite base.

### Résumé

La présente divulgation vient améliorer tout ou partie de la situation.

Il est proposé, **selon un premier aspect,** un coussin modulaire d'assise, configuré pour être fixé à une structure de siège présentant une structure d'assise comprenant deux flasques latéraux entretoisés par un tube avant, transversal, et un tube arrière, transversal,
ledit coussin modulaire d'assise comprenant à l'état assemblé:
- un support formant une base comprenant un système d'interface mécanique pour la fixation sur la structure d'assise,
- une matelassure reposant sur une surface supérieure du support, et éventuellement.
- un revêtement d'habillage recouvrant la matelassure,
et dans lequel ledit système d'interface mécanique comprend :
- une interface mécanique arrière, sur une portion arrière du support, comprenant un premier logement, ouvert, configuré pour loger le tube arrière de manière verrouillable mécaniquement par un système de verrouillage, en particulier de l'interface mécanique arrière et/ou externe à ladite interface mécanique arrière, voire externe au coussin modulaire d'assise
- une interface mécanique avant, sur une partie avant dudit support comprenant un deuxième logement, ouvert, configuré pour loger le tube avant de manière pivotable autour dudit tube avant, et dans lequel ledit système d'interface mécanique est configuré pour autoriser la fixation du coussin modulaire d'assise par les étapes suivantes:
   /A2/ mise en regard de l'interface mécanique avant avec le tube avant et insertion du tube avant dans le deuxième logement, et
   /B2/ pivotement du support de garniture autour du tube avant alors emboité dans le deuxième logement de l'interface mécanique avant jusqu'à une insertion du tube arrière dans le premier logement de l'interface mécanique arrière et verrouillage mécanique du tube arrière dans le premier logement par ledit système de verrouillage.

Les caractéristiques exposées dans les paragraphes suivants peuvent, optionnellement, être mises en oeuvre, indépendamment les unes des autres ou en combinaison les unes avec les autres :
- Le premier logement et/ou le deuxième logement sont des logements en U ;
- le deuxième logement, avant débouche vers l'avant du support de garniture et alors que le premier logement débouche vers le dessous du support de garniture ;
- le premier logement comprend une première direction d'insertion D1 pour le tube arrière et le deuxième logement comprend une deuxième direction d'insertion D2 pour le tube avant, la première direction d'insertion D1 et la deuxième direction d'insertion D2 étant inclinées l'une par rapport à l'autre d'un angle compris entre 25° et 135°, par exemple entre 45° et 90°;
- ledit système de verrouillage de l'interface mécanique arrière est élastiquement déformable, configuré pour autoriser un verrouillage élastique de sorte que le verrouillage du tube arrière dans le premier logement est obtenu, en fin de course lors du pivotement effectué à l'étape /B/ du coussin modulaire autour du tube avant, par déformation élastique du système de verrouillage de l'interface mécanique arrière, de préférence ledit premier logement comprenant une entrée de gorge de dimension inférieure à la section du tube arrière , et une portion centrale logeant le tube arrière en position de verrouillage ajustée à la section du tube arrière ;
- le support est un élément plastique obtenu par moulage par injection, et dans lequel de préférence les interfaces mécaniques avant et arrière sont obtenues par la matière venant du support, typiquement lors du moulage dudit support et dans lequel ledit élément plastique d'un seul tenant s'étend

-- d'une traverse avant jusqu'une traverse arrière dudit élément plastique suivant une direction longitudinale X de l'assise et,
--d'un premier longeron jusqu'à un deuxième longeron, suivant une direction transversale Y de ladite assise ;

La présente divulgation concerne encore, selon un **second aspect,** un ensemble de siège comprenant un coussin modulaire d'assise selon la présente divulgation et une structure d'assise comprenant deux flasques latéraux entretoisés par un tube arrière et un tube avant dans lequel, ledit coussin modulaire d'assise comprenant, à l'état assemblé:
- ledit support,
- la matelassure reposant sur une surface supérieure du support,
- le revêtement d'habillage recouvrant la matelassure
et dans lequel ledit système d'interface mécanique est configuré pour autoriser la fixation du coussin modulaire d'assise par les étapes suivantes:
/A2/ mise en regard de l'interface mécanique avant avec le tube avant et insertion du tube avant dans le deuxième logement, et
/B2/ pivotement du support de garniture autour du tube avant alors emboité dans le deuxième logement de l'interface mécanique avant jusqu'à une insertion du tube arrière dans le premier logement de l'interface mécanique arrière et verrouillage mécanique du tube arrière dans le premier logement par ledit système de verrouillage.

Selon un mode de réalisation du deuxième aspect, ledit ensemble comprend outre l'assise comprenant la structure d'assise et le coussin modulaire d'assise, un dossier comprenant une structure de dossier et un élément de dossier, en particulier un coussin modulaire dossier, amovible de la structure de dossier, et dans lequel ledit système de verrouillage comprend le dossier, en particulier ledit élément de dossier et/ou la structure de dossier, le verrouillage du tube arrière dans le premier logement étant obtenu par une mise en place dudit dossier en particulier du élément de dossier et/ou de la structure de dossier, en particulier un coussin modulaire de dossier sur la structure de dossier, la structure de dossier et/ou ledit élément de dossier fixé à la structure du dossier formant une butée interdisant la sortie du tube arrière du premier logement, en interdisant le pivotement du coussin modulaire d'assise (CM) autour du tube avant.

La présente divulgation concerne encore, selon un **troisième aspect,** un procédé d'obtention d'un ensemble de siège selon la présente divulgation, à l'état assemblé comprenant les étapes suivantes :
- fourniture d'une structure de siège comprenant une structure d'assise, à l'état assemblé,, la structure d'assise comprenant deux flasques latéraux entretoisés par un tube avant, transversal, et un tube arrière transversal,
- fourniture d'un coussin modulaire d'assise comprenant à l'état assemblé au moins un support comprenant un système d'interface mécanique pour la fixation sur la structure d'assise, une matelassure reposant sur une surface supérieure de la base et un revêtement d'habillage recouvrant la matelassure, ledit système d'interface mécanique comprenant une interface mécanique arrière, sur une partie arrière du support, comprenant un premier logement configuré pour loger le tube arrière de manière verrouillable par le système de verrouillage, et une interface mécanique avant sur une partie avant du support, configurée pour loger le tube avant (23), dans un deuxième logement,
- assemblage du coussin modulaire à ladite structure de siège par mise en oeuvre des étapes suivantes :
   /A2/ mise en regard de l'interface mécanique avant avec le tube avant et insertion du tube avant dans le deuxième logement, et
   /B2/ pivotement du support de garniture autour du tube avant alors emboité dans le deuxième logement de l'interface mécanique avant jusqu'à une insertion du tube arrière dans le premier logement de l'interface mécanique arrière et verrouillage mécanique du tube arrière dans le premier logement par un système de verrouillage.

Selon un mode de réalisation, ledit ensemble comprend, outre, la structure d'assise, un dossier, et dans lequel le système de verrouillage comprend ledit dossier, et dans lequel le verrouillage du tube arrière dans le premier logement est obtenu, par la fixation du dossier sur la structure d'assise à l'état assemblé, et en particulier la fixation d'une structure de dossier sur la structure d'assise et/ou d'un élément de dossier tel qu'un coussin modulaire de dossier sur la structure de dossier préalablement fixée à la structure d'assise, ledit dossier, en particulier la structure de dossier et/ou ledit élément de dossier, en particulier le coussin modulaire de dossier formant une butée interdisant la sortie du tube arrière du premier logement, en interdisant le pivotement du coussin modulaire d'assise autour du tube avant.

### Brève description des dessins

D'autres caractéristiques, détails et avantages apparaîtront à la lecture de la description détaillée ci-après, et à l'analyse des dessins annexés, sur lesquels :
**Fig. 1**

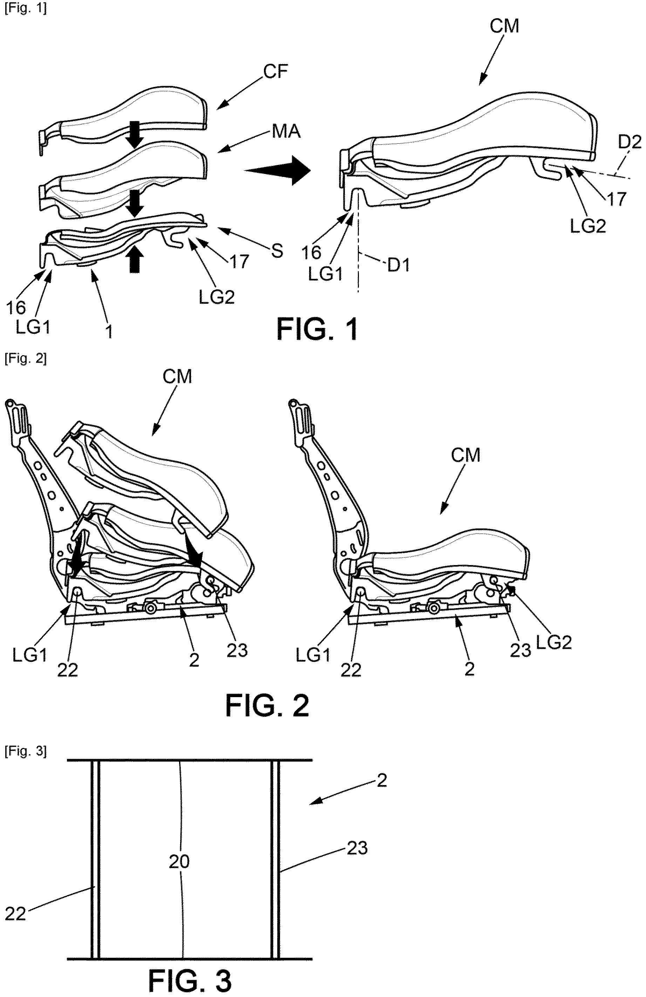

   [Fig. 1] est une vue d'un coussin modulaire d'assise à l'état désassemblé à gauche et à l'état assemblé à droite, comportant un support de garniture, une matelassure et un revêtement d'habillage.
**Fig. 2**
   [Fig. 2] ] est vue d'une cinématique d'assemblage portant sur le coussin modulaire de la figure 1, la cinématique comprenant la mise en regard de l'interface mécanique avant avec le tube avant, et un pivotement du support de garniture autour du tube avant, alors emboité dans le deuxième logement de l'interface mécanique avant, jusqu'à une insertion du tube arrière dans le premier logement de l'interface mécanique avant, et verrouillage mécanique du tube arrière dans le premier logement par un système de verrouillage.
**Fig. 3**
   [Fig. 3] est une vue schématique de dessus de la structure d'assise, typiquement métallique, voire composite, comprenant deux flasques latéraux, s'étendant suivant un direction X longitudinale, et un tube avant, et un tube arrière, transversaux, reliant respectivement les deux flasques latéraux, le tube avant sur l'avant de la structure d'assise et le tube arrière sur l'arrière de la structure d'assise.
**Fig. 4**

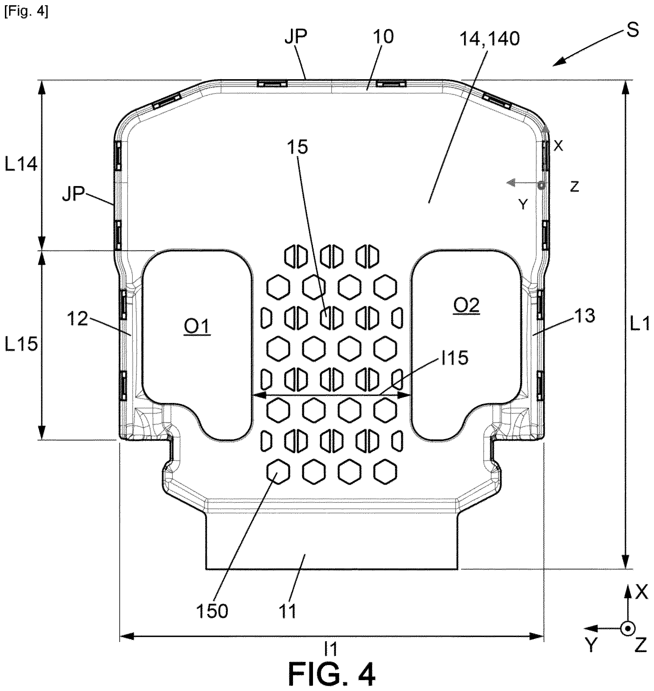

   [Fig. 4] montre un mode de réalisation du support de garniture formant la base du coussin modulaire d'assise, obtenu par un élément plastique d'un seul tenant, typiquement moulé par injection, et comporte de manière notable une portion de surpension, flexible sur une portion arrière du support.
**Fig. 5**

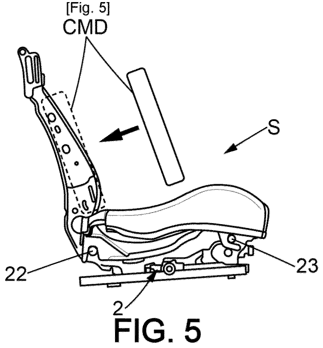

   [Fig. 5] est une vue d'un mode de réalisation d'un système de verrouillage, qui comporte la mise en place d'un élément de dossier, en particulier un coussin modulaire de dossier, et sa fixation sur une structure d'assise, postérieurement à l'insertion du tube arrière dans le premier logement, ledit élément dossier, formant alors une butée pour une portion arrière du coussin modulaire d'assise, interdisant le pivotement inverse (au sens de montage) du coussin modulaire d'assise autour du tube avant reçu dans le deuxième logement, et ainsi interdisant l'extraction du tube arrière du premier logement.

### Description des modes de réalisation

De manière générale, la présente divulgation concerne un coussin modulaire d'assise CM, configuré pour être fixé à une structure de siège 2 présentant une structure d'assise comprenant deux flasques latéraux 20 entretoisés par un tube avant 23, transversal, et un tube arrière 22, transversal. La structure d'assise peut être typiquement en métal, voire en composite.

Le coussin modulaire d'assise comprend à l'état assemblé:
- un support S, encore appelé support de garniture, formant une base comprenant un système d'interface mécanique pour la fixation sur la structure d'assise,
- une matelassure MA reposant sur une surface supérieure du support, et éventuellement mais non nécessairement.
- un revêtement d'habillage CF recouvrant la matelassure.

La matelassure MA confère le confort de l'assise. La matelassure peut être à base de mousse de polyuréthanne, typiquement obtenu par moulage, ou en un autre matériau tel qu'une structure 3 dimension de fibres continues, formant des boucles soudées en elles, obtenu par extrusion des fibres thermoplastiques, et calandrage des fibres par deux organes (rouleaux), partiellement immergés.

De manière notable, ledit système d'interface mécanique comprend :
- une interface mécanique arrière 16, sur une portion arrière du support S, comprenant un premier logement LG1, ouvert, configuré pour loger le tube arrière 22 de manière verrouillable mécaniquement par un système de verrouillage, en particulier de l'interface mécanique arrière, à savoir interne au coussin modulaire et/ou encore externe à ladite interface mécanique arrière, voire externe au coussin modulaire d'assise, par exemple par la mise en place du dossier,
- une interface mécanique avant 17, sur une partie avant dudit support comprenant un deuxième logement LG2, ouvert, configuré pour loger le tube avant 23 de manière pivotable autour dudit tube avant 23.

Ledit système d'interface mécanique est configuré pour autoriser la fixation du coussin modulaire d'assise par les étapes suivantes, et comme illustré à titre d'exemple non limitatif à la figure 2:
/A2/ mise en regard de l'interface mécanique avant 17 avec le tube avant 23 et insertion du tube avant dans le deuxième logement LG2, et
/B2/ pivotement du support de garniture autour du tube avant 23 alors emboité dans le deuxième logement LG2 de l'interface mécanique avant 17 jusqu'à une insertion du tube arrière 22 dans le premier logement LG1 de l'interface mécanique arrière 16 et verrouillage mécanique du tube arrière 22 dans le premier logement LG1 par ledit système de verrouillage.

Le premier logement LG1 et/ou le deuxième logement LG2 peuvent être typiquement des logements en U. Les logements en U peuvent être continus sur la direction transversale Y, ou résulter de plusieurs sections discontinues.

Selon un mode de réalisation, et tel qu'illustré à la figure 1, le deuxième logement LG2, typiquement solidaire à proximité de la traverse avant 10 débouche vers l'avant du support de garniture 1, à savoir dans le sens suivant la direction longitudinale X allant d'une traverse arrière 11 du support jusqu'à une traverse avant 10 dudit support.

Le deuxième logement LG2, débouchant vers l'avant assure en particulier une retenue efficace du coussin modulaire, en cas de crash frontal : en cas de crash frontal, l'effort du crash contraint le tube avant 23, en fond du deuxième logement LG2.

Le première logement LG1, débouche vers le dessous du support, typiquement suivant la direction verticale Z. En cas de crash, le première logement LG1 participe à la retenue du coussin modulaire d'assise par appui entre une paroi latérale du premier logement LG1 et le tube arrière 22.

En cas de crash, avantageusement ; la retenue du coussin modulaire d'assise (et de l'occupant pesant sur ce dernier) par rapport à la structure d'assise est répartie sur le tube avant 23 et le tube arrière 22 de la structure d'assise. On augmente les performances de retenue en cas de crash.

De manière générale, le premier logement LG1 comprend une première direction d'insertion D1 pour le tube arrière 22 et le deuxième logement LG2 comprend une deuxième direction d'insertion D2 pour le tube avant 23, la première direction d'insertion D1 et la deuxième direction d'insertion D2 étant inclinées l'une par rapport à l'autre d'un angle compris entre 25° et 135°, et en particulier entre 45° et 90°.

De manière générale, ledit système de verrouillage de l'interface mécanique arrière 16 peut être élastiquement déformable, configuré pour autoriser un verrouillage élastique de sorte que le verrouillage du tube arrière 22 dans le premier logement LG1 est obtenu, en fin de course lors du pivotement effectué à l'étape /B/ du coussin modulaire autour du tube avant 23, par déformation élastique du système de verrouillage de l'interface mécanique arrière 16. A cet effet, le premier logement LG1 peut être élastiquement déformable et comprendre une entrée de gorge de dimension inférieure à la section du tube arrière 22, et une portion centrale logeant le tube arrière en position de verrouillage ajutée à la section du tube arrière 22.

Le système de verrouillage peut encore comprendre un organe de retenue spécifique, tel qu'une patte, ledit organe de retenue fixé dans un second temps par l'opérateur. Il peut s'agir en particulier d'un système de verrouillage comportant une ou plusieurs vis. Le système de verrouillage peut encore comprendre un verrou.

Encore, selon une autre possibilité de verrouillage (éventuellement combinable avec le verrouillage élastique), le verrouillage du tube arrière 22 dans le premier logement LG1, est obtenu par une mise en place du dossier, en particulier un coussin modulaire de dossier sur une structure de dossier et/ou encore par mise en place d'une structure de dossier sur la structure d'assise. Une fois ledit élément de dossier (ou la structure de dossier) fixé à la structure du dossier, ledit élément de dossier (ou la structure de dossier) forme une butée supérieure, venant coopérer avec un portion arrière du coussin modulaire, interdisant la sortie du tube arrière 22 du premier logement LG1, par pivotement autour du tube avant 23.

Le système de verrouillage peut donc être interne au coussin modulaire d'assise, ou externe au coussin, ou encore comporter une partie interne au coussin modulaire et une partie externe à celui-ci.

Le support de garniture S peut être un élément plastique 1 typiquement obtenu par moulage par injection. Les interfaces mécaniques avant et arrière 16, 17 sont de préférence obtenues par la matière venant du support de garniture, typiquement obtenues lors du moulage dudit support de garniture 1. Autrement dit, l'interface mécanique avant et arrière et dont le premier logement LG1 et le deuxième logement LG2 forment un élément plastique d'un seul tenant avec le corps du support de garniture S.

De manière générale, ledit élément plastique 1 d'un seul tenant peut s'étendre
- d'une traverse avant 10 jusqu'une traverse arrière 11 dudit élément plastique suivant une direction longitudinale X de l'assise et,
- d'un premier longeron 12 jusqu'à un deuxième longeron 12, suivant une direction transversale Y de ladite assise.

Le support de garniture d'assise S, comprend ainsi (ou typiquement consiste en) un élément plastique 1 d'un seul tenant s'étendant :
- de la traverse avant 10 jusqu'à une traverse arrière 11 dudit élément plastique suivant une direction longitudinale X de l'assise et,
- du premier longeron 12 jusqu'au deuxième longeron 12, suivant une direction transversale Y de ladite assise.

La traverse avant 10, la traverse arrière 11 sont sensiblement parallèles suivant la direction transversale Y, d'une part, et le premier longeron 12 et le deuxième longeron 13, sont sensiblement parallèles suivant la direction longitudinales X.

Les traverse avant et arrière 10,11 et le premier et deuxième longerons 12,13 s'étendant bout-à-bout les uns aux autres en périphérie dudit élément plastique 1 en formant un cadre de support.

Le cadre de support peut éventuellement être configuré pour venir en appui sur la structure d'assise 2 d'un siège de véhicule, typiquement (mais non nécessairement) par appui des longerons 12, 13 dudit élément plastique sur des flasques 20 de la structure d'assise, et par des appuis de la traverse avant 10 et de la traverse arrière 11, respectivement sur un tube avant 23 et sur un tube arrière 22 s'étendant parallèlement l'un à l'autre en reliant les deux flasques 20.

Le support peut présenter une jupe périphérique JP, saillante vers le bas du support.

Autrement dit, le cadre support peut être en appui uniquement sur la traverse avant 10 et sur la traverse arrière 11 de la structure, ou encore en appui à la fois simultanément sur la traverse avant 10 et sur la traverse arrière 11, mais encore sur les flasques 20 de la structure.

Ledit élément plastique 1 peut comprendre une portion intermédiaire 14, s'étendant suivant la direction transversale Y, la portion intermédiaire 14 reliant le premier longeron 12 jusqu'au deuxième longeron 13, ladite portion intermédiaire 14 agencée en une position intermédiaire entre la traverse avant 10 et la traverse arrière 11 suivant la direction longitudinale X.

La position intermédiaire débute typiquement à une distance L14 de la traverse avant 10 sur la première moitié de support 1 suivant la direction longitudinale X, notamment à une distance L14 comprise entre 1/6 et 1/3 du bord avant de la traverse avant 10, par exemple à environ ¼ de la distance de la traverse avant 10

Selon un mode de réalisation ledit élément plastique comprend une portion de suspension 15, flexible, s'étendant de manière continue suivant la direction longitudinale X depuis la portion intermédiaire 14 jusqu'à la traverse arrière 11 dudit élément plastique en reliant ladite portion intermédiaire 14 à la traverse arrière 11.

La portion de suspension s'étend de préférence de manière discontinue suivant la direction transversale Y entre le premier longeron 12 et le deuxième longeron 1, ladite portion de suspension 15 étant séparée, d'une part, par une première ouverture latérale O1 agencée entre le premier longeron 12 et ladite portion de suspension 15, et d'autre part, par une deuxième ouverture latérale O2 agencée entre la portion de suspension 15 et le deuxième longeron 13.

Ladite premier ouverture latérale O1 et la deuxième ouverture latérale O2 séparent ladite portion de suspension 15 du premier longeron 12 et du deuxième longeron 13 sur la longueur L15 de la portion de suspension 15, de préférence de manière continue sur toute la longueur L15 (exemple illustré) voire éventuellement de manière discontinue sur la longueur L15 en raison d'interruption(s) locale(s) de la première ouverture O1 et de la deuxième ouverture O2 sur la longueur (selon un exemple non illustré).

La portion de suspension forme une lame flexible plastique qui s'étend sur la longueur L15 suivant la direction longitudinale X entre les ouvertures O1, O2, et en largeur 115 suivant la direction transversale Y depuis la première ouverture O1, jusqu'à la deuxième ouverture O2.

La portion de suspension 15 a pour fonction de recevoir du fessier de l'occupant du siège en autorisant une flexibilité de la portion de suspension sous la charge, suivant la direction verticale Z.

La flexibilité maximale en Z peut de l'ordre de 30 mm typiquement comprise entre 0,5 cm et 3 cm par exemple entre 1cm et 3 cm pour un mannequin moyen de 75 kg.

Selon ce mode de réalisation, le support de garniture 1 peut être avantageusement dépourvu de suspension métallique, et la suspension étant obtenue uniquement par ledit élément plastique 1, d'un seul tenant.

La largeur 115 de la portion de suspension 15 selon la direction transversale Y, délimitée entre la première ouverture O1 et la deuxième ouverture O2 peut être inférieure à 60% de la largeur I1 dudit élément plastique entre le premier longeron 12 et le deuxième longeron 13 selon ladite direction transversale, par exemple compris entre 25% et 50% de la largeur I1 dudit élément plastique La portion de suspension 15 s'étend typiquement sur une portion médiane dudit support suivant la direction transversale Y, et seulement partiellement sur la largeur du support de garniture. Un tel dimensionnement augmente la flexibilité sous contrainte verticale de la portion de suspension 15. La portion de suspension s'étend sur une portion arrière dudit support, à proximité de la traverse arrière 11, relativement par rapport à la traverse avant 10.

La première ouverture O1 et la deuxième ouverture O2 ont ainsi pour fonction conférer une flexibilité augmentée à la portion de suspension 15, et concoure par ailleurs à un objectif global de réduction de matière, et donc de poids dudit support de garniture plastique.

La lame flexible de la portion de suspension peut s'étendre en longueur L15, par exemple suivant une dimension comprise entre 25% et 50% de la dimension du support S suivant la direction longitudinale.

Selon un mode de réalisation la lame flexible présente tout ou partie des caractéristiques suivantes :
- une longueur L15 comprise entre 200cm et 300 cm, par exemple 270cm,
- une largeur 115 comprise entre 180cm et 250cm, par exemple 220cm,
- une épaisseur e15 compris 1mm et 4 mm, par exemple 2,5 mm.

De manière générale, et comme illustré à titre indicatif selon la vue de la figure 4, le support de garniture S peut présenter tout ou partie des caractéristique suivantes :
- la face supérieure de la portion de suspension peut former une cuvette, suivant la direction longitudinale X,
- la portion de suspension 15 peut être agencée sur le support de garniture, en dessous de la portion avant du support 1, la portion avant comprenant la traverse avant 10 et la portion intermédiaire 14.

Le profil de soutien du support de garniture peut être montant suivant la direction longitudinale X, depuis la traverse arrière 11 jusqu'à la partie avant dudit support. Un tel profil de support s'oppose au phénomène de sous-marinage de l'occupant du siège, à savoir à un passage en dessous de la ceinture de sécurité, en cas de choc frontal.

La portion de suspension 15, peut s'étendre sous le niveau du premier longeron 12 et du deuxième longeron 13.

De manière générale, et comme illustrée à titre d'exemple aux figures, la portion de suspension 15 peut comprendre des évidements 150 (borgnes ou traversant) suivant une épaisseur de ladite portion de suspension. Les évidements 150 sont répartis suivant une dimension en longueur de ladite portion de suspension 15, à savoir suivant la direction longitudinale X, et en particulier sur toute sa longueur L15 ou au-delà, et/ou suivant une dimension de ladite portion de suspension 15 suivant la direction transversale Y et en particulier sur toute sa largeur 115. Le taux de vide surfacique de la portion de suspension 15 est compris entre 10% et 80%, en particulier en présence d'évidements traversants, et par exemple supérieur à 20%, voire supérieur à 30%, voire supérieure à 40%, voire supérieure à 50%.

Les évidements participent à conférer une flexibilité à la portion de suspension suivant la direction verticale Z, et concourent à la réduction de la masse dudit support de garniture 1.

Selon un mode de réalisation, la zone Z dudit support de garniture délimitée, suivant la direction longitudinale X, d'un part, entre la traverse avant 10 et la portion intermédiaire 14, et d'autre part, entre le premier longeron 12 et le deuxième longeron 13 suivant la direction transversale Y, peut être avantageusement évidée.

Selon un autre mode de réalisation, le support de garniture peut comprendre outre un élément plastique 1 formant la traverse avant 10 et la traverse arrière 11, ainsi que le premier longeron 12 et le deuxième longeron 13, un évidement sur une portion arrière dudit élément plastique, recevant une suspension typiquement métallique, à fils ressort.

La présente divulgation concerne, encore selon ce second aspect, un ensemble de siège comprenant ledit coussin modulaire d'assise et une structure d'assise 2 comprenant deux flasques latéraux 20 entretoisés par un tube arrière 22 et un tube avant 2 dans lequel,
ledit coussin modulaire CM d'assise comprenant, à l'état assemblé :
- le support de garniture S,
- la matelassure MA reposant sur une surface supérieure du support de garniture
- le revêtement d'habillage CF recouvrant la matelassure.

La structure d'assise comprenant la traverse avant et la traverse arrière, ainsi que les flasques peut être en métal ou en composite.

Le système d'interface mécanique est configuré pour autoriser la fixation du coussin modulaire d'assise par les étapes suivantes:
/A2/ mise en regard de l'interface mécanique avant 17 avec le tube avant 23 et insertion du tube avant dans le deuxième logement LG2 et
/B2/ pivotement du support de garniture autour du tube avant 23 alors emboité dans le deuxième logement LG2 de l'interface mécanique avant 17 jusqu'à une insertion du tube arrière 22 dans le premier logement LG1 de l'interface mécanique arrière 16 et verrouillage mécanique du tube arrière 22 dans le premier logement LG1 par ledit système de verrouillage.

Le support S est alors fixé à la structure d'assise 2 dans une position dans laquelle le tube avant 23 est logé dans le deuxième logement LG2 et le tube arrière 22 est logé dans le premier logement LG1, verrouillé dans la premier logement LG1 par le système de verrouillage

Le support S est alors fixé à la structure d'assise2 dans une position dans laquelle :
- la traverse avant 10 et la traverse arriérai 1 dudit élément plastique sont en appui, respectivement, sur le tube avant 23 et le tube arrière 22 via ladite interface mécanique avant 16 et ladite interface mécanique arrière 17, et de préférence, mais non nécessairement,
- le premier longeron 12 et le deuxième longeron 13 dudit élément plastique sont en appui respectivement sur les deux flasques latéraux 20.

La structure d'assise 2 peut être typiquement ancré à un plancher de véhicule, typiquement par un couple de glissières, autorisant d'avancer ou de reculer la structure d'assise. Chaque glissière comprend typiquement un profilé inférieur typiquement femelle, solidaire du plancher, et un profilé mâle, monté coulissant sur le profilé femelle, solidaire de la structure d'assise

La présente divulgation est encore relative à un procédé d'obtention d'un ensemble de siège, à l'état assemblé comprenant les étapes suivantes :
- fourniture d'une structure de siège 2 comprenant une structure d'assise, à l'état assemblé, la structure d'assise comprenant deux flasques latéraux 20 entretoisés par un tube avant 23, transversal, et un tube arrière 22 transversal,
- fourniture d'un coussin modulaire d'assise CM comprenant à l'état assemblé au moins un support S comprenant un système d'interface mécanique pour la fixation sur la structure d'assise, une matelassure MA reposant sur une surface supérieure de la base et un revêtement d'habillage F recouvrant la matelassure, ledit système d'interface mécanique comprenant une interface mécanique arrière 16, sur une partie arrière du support S, comprenant un premier logement LG1 configuré pour loger le tube arrière 22 de manière verrouillable, et une interface mécanique avant 17 sur une partie avant du support, configurée pour loger le tube avant 23, dans un deuxième logement LG2,
- assemblage du coussin modulaire à ladite structure de siège par mise en oeuvre des étapes suivantes :
   /A2/ mise en regard de l'interface mécanique avant 17 avec le tube avant 23 et insertion du tube avant dans le deuxième logement LG2, et
   /B2/ pivotement du support de garniture autour du tube avant 23 alors emboité dans le deuxième logement LG2 de l'interface mécanique avant 17 jusqu'à une insertion du tube arrière 22 dans le premier logement LG1 de l'interface mécanique arrière 16 et verrouillage mécanique du tube arrière 22 dans le premier logement LG1 par un système de verrouillage.

Le coussin modulaire d'assise mise en oeuvre dans le procédé est typiquement celui précédemment décrit, selon la présente divulgation.

Selon un mode de réalisation du procédé, ledit ensemble peut comprendre, outre l'assise comprenant la structure d'assise et le coussin modulaire d'assise, un dossier, en particulier une structure de dossier et/ou un coussin modulaire de dossier, le dossier configuré pour être fixé de manière amovible sur la structure d'assise. Selon un mode de réalisation avantageux, le système de verrouillage comprend ainsi le dossier, et en particulier la structure de dossier et/ou un élément de dossier tel que ledit coussin modulaire de dossier.

La structure de dossier peut être typiquement articulé, suivant un axe transversal sur une portion arrière de la structure d'assise. La structure de dossier est typiquement en métal ou en composite. L'élément de dossier, en particulier le coussin modulaire, comprend typiquement une matelassure, voire un support, et encore éventuellement un revêtement d'habillage ou coiffe, à l'instar du coussin modulaire d'assise.

Selon un premier mode de réalisation, la structure de dossier, y compris la structure d'assise et la structure d'assise est à l'état assemblé, préalablement au verrouillage du coussin modulaire d'assise selon /B2/. Dans un tel premier mode de réalisation, le verrouillage par le dossier est obtenu par la mise en place d'un élément de dossier sur la structure de dossier, et en particulier d'un coussin modulaire de dossier CMD, et comme illustré schématiquement à la figure 5.

En particulier, un verrouillage du tube arrière 22 dans le premier logement LG1 est obtenu, par la fixation de l'élément de dossier en particulier du coussin modulaire de dossier sur la structure de dossier, ledit élément de dossier, en particulier le coussin modulaire de dossier, formant une butée supérieure pour le coussin modulaire d'assise, interdisant la sortie du tube arrière 22 du premier logement LG1, par pivotement du coussin modulaire d'assise autour du tube avant 23.

Selon un deuxième mode de réalisation, seule la structure d'assise est à l'état assemblé, préalablement au verrouillage du coussin modulaire d'assise selon /B2/ ; à savoir que la structure de dossier est non assemblée à la structure d'assise, avant verrouillage du coussin modulaire d'assise. Dans un tel second mode de réalisation, le verrouillage par le dossier est obtenu par la mise en place et la fixation de la structure de dossier sur la structure d'assise, voire également dudit élément de dossier.

La présente divulgation concerne encore un procédé de maintenance d'un ensemble de siège comprenant le désassemblage du coussin modulaire d'assise CM de la structure de siège, en particulier sans démontage de la structure de siège à un plancher du véhicule par la mise en oeuvre des étapes suivantes :
ICI déverrouillage du système de verrouillage, libération du tube arrière 22 de l'interface mécanique arrière 16 et rotation du coussin modulaire CM d'assise autour du tube avant 23 logé dans le deuxième logement LG2 jusqu'à obtenir l'échappement du tube arrière 22 en dehors du premier logement LG1 et successivement
/D/ retrait du coussin modulaire par extraction du tube avant 23 du deuxième logement LG2 de l'interface mécanique avant 17.

De manière générale, les configurations du premier logement LG1 et du deuxième LG2 interdisent d'extraire le tube avant 23 du deuxième logement LG2, et tant que le tube arrière n'a pas été extrait du premier logement LG1, par pivotement selon /C/.

### Liste des signes de référence

- 1. Elément plastique,
- 10. Traverse avant,
- 11. Traverse arrière,
- 12. Premier longeron,
- 13. Deuxième longeron,
- 14. Portion intermédiaire,
- 140. Traverse intermédiaire,
- 15. Portion de suspension,
- 150. Evidements,
- O1. Première ouverture (entre le premier longeron et la portion de suspension)
- O2. Deuxième ouverture (entre le deuxième longeron et la portion de suspension),
- 2. Structure d'assise,
- 20. Flasques latéraux,
- 22. Tube arrière,
- 23. Tube avant
- 16. Interface mécanique arrière,
- LG1. Premier logement (pour le tube arrière 22),
- 17. Interface mécanique avant,
- LG2. Deuxième logement (pour tube avant 23),
- CM. Coussin modulaire d'assise,
- MA. Matelassure,
- CF. Revêtement d'habillage,
- D1, D2. Première et deuxième direction d'insertion,
- S. Support.

## Revendications

1. Coussin modulaire d'assise (CM), configuré pour être fixé à une structure de siège (2) présentant une structure d'assise comprenant deux flasques latéraux (20) entretoisés par un tube avant (23), transversal, et un tube arrière (22), transversal,
ledit coussin modulaire d'assise comprenant à l'état assemblé:
- un support (S) formant une base comprenant un système d'interface mécanique pour la fixation sur la structure d'assise,
- une matelassure (MA) reposant sur une surface supérieure du support,
et dans lequel ledit système d'interface mécanique comprend :
- une interface mécanique arrière (16), sur une portion arrière du support (S), comprenant un premier logement (LG1), ouvert, configuré pour loger le tube arrière (22) de manière verrouillable mécaniquement par un système de verrouillage, en particulier de l'interface mécanique arrière et/ou externe à ladite interface mécanique arrière, voire externe au coussin modulaire d'assise,
- une interface mécanique avant (17), sur une partie avant dudit support comprenant un deuxième logement (LG2), ouvert, configuré pour loger le tube avant (23) de manière pivotable autour dudit tube avant (23),
et dans lequel ledit système d'interface mécanique est configuré pour autoriser la fixation du coussin modulaire d'assise par les étapes suivantes:
/A2/ mise en regard de l'interface mécanique avant (17) avec le tube avant (23) et insertion du tube avant dans le deuxième logement (LG2), et
/B2/ pivotement du support de garniture autour du tube avant (23) alors emboité dans le deuxième logement (LG2) de l'interface mécanique avant (17) jusqu'à une insertion du tube arrière (22) dans le premier logement (LG1) de l'interface mécanique arrière (16) et verrouillage mécanique du tube arrière (22) dans le premier logement (LG1) par ledit système de verrouillage.

2. Coussin modulaire d'assise (CM) selon la revendication 1, dans lequel Le premier logement (LG1) et/ou le deuxième logement (LG2) sont des logements en U.

3. Coussin modulaire d'assise (CM) selon la revendication 1 ou 2, dans lequel le deuxième logement (LG2), avant (10) débouche vers l'avant du support de garniture (1) et alors que le premier logement (LG1) débouche vers le dessous du support de garniture (1).

4. Coussin modulaire d'assise (CM) selon la revendication 3, dans lequel, le premier logement (LG1) comprend une première direction d'insertion D1 pour le tube arrière (22) et le deuxième logement (LG2) comprend une deuxième direction d'insertion D2 pour le tube avant 23, la première direction d'insertion D1 et la deuxième direction d'insertion D2 étant inclinées l'une par rapport à l'autre d'un angle compris entre 25° et 135°, par exemple entre 45° et 90°.

5. Coussin modulaire d'assise (CM) selon l'une des revendications 1 à 4, dans lequel ledit système de verrouillage de l'interface mécanique arrière (16) est élastiquement déformable, configuré pour autoriser un verrouillage élastique de sorte que le verrouillage du tube arrière (22) dans le premier logement (LG1) est obtenu, en fin de course lors du pivotement effectué à l'étape /B/ du coussin modulaire autour du tube avant (23), par déformation élastique du système de verrouillage de l'interface mécanique arrière (16), de préférence ledit premier logement (LG1) comprenant une entrée de gorge de dimension inférieure à la section du tube arrière (22), et une portion centrale logeant le tube arrière en position de verrouillage ajustée à la section du tube arrière (22).

6. Coussin modulaire d'assise selon l'une des revendications 1 à 5, dans lequel le support (S) est un élément plastique (1) obtenu par moulage par injection, et dans lequel de préférence les interfaces mécaniques avant et arrière (16, 17) sont obtenues par la matière venant du support, typiquement lors du moulage dudit support (S) et dans lequel ledit élément plastique (1) d'un seul tenant s'étend
- d'une traverse avant (10) jusqu'une traverse arrière (11) dudit élément plastique suivant une direction longitudinale X de l'assise et,
- d'un premier longeron (12) jusqu'à un deuxième longeron (13), suivant une direction transversale Y de ladite assise.

7. Ensemble de siège comprenant un coussin modulaire d'assise selon l'une des revendications 1 à 7 et une structure d'assise (2) comprenant deux flasques latéraux (20) entretoisés par un tube arrière (22) et un tube avant 23) dans lequel,
ledit coussin modulaire CM d'assise comprenant, à l'état assemblé:
- ledit support (S),
- la matelassure (MA) reposant sur une surface supérieure du support (S),
- le revêtement d'habillage (CF) recouvrant la matelassure
et dans lequel ledit système d'interface mécanique est configuré pour autoriser la fixation du coussin modulaire d'assise par les étapes suivantes:
/A2/ mise en regard de l'interface mécanique avant (17) avec le tube avant (23) et insertion du tube avant dans le deuxième logement (LG2), et
/B2/ pivotement du support de garniture autour du tube avant (23) alors emboité dans le deuxième logement (LG2) de l'interface mécanique avant (17) jusqu'à une insertion du tube arrière (22) dans le premier logement (LG1) de l'interface mécanique arrière et verrouillage mécanique du tube arrière (22) dans le premier logement (LG1) par ledit système de verrouillage.

8. Ensemble de siège selon la revendication 7, comprenant outre l'assise y compris la structure d'assise et le coussin modulaire d'assise, un dossier comprenant une structure de dossier (3) et un élément de dossier, en particulier un coussin modulaire dossier (CMD), , et dans lequel ledit système de verrouillage comprend le dossier, en particulier ledit élément de dossier et/ou la structure de dossier, le verrouillage du tube arrière (22) dans le premier logement (LG1) étant obtenu par une mise en place du dossier, en particulier dudit élément de dossier et/ou de la structure de dossier, en particulier un coussin modulaire de dossier sur la structure de dossier, le dossier, en particulier la structure de dossier ou encore ledit élément de dossier fixé à la structure du dossier, formant une butée interdisant la sortie du tube arrière (22) du premier logement (LG1), en interdisant le pivotement du coussin modulaire d'assise (CM) autour du tube avant (23).

9. Procédé d'obtention d'un ensemble de siège selon la revendication 7 ou 8 à l'état assemblé comprenant les étapes suivantes :
- fourniture d'une structure de siège (2), comprenant une structure d'assise à l'état assemblé, la structure d'assise comprenant deux flasques latéraux (20) entretoisés par un tube avant (23), transversal, et un tube arrière (22) transversal,
- fourniture d'un coussin modulaire d'assise (CM) comprenant à l'état assemblé au moins un support (S) comprenant un système d'interface mécanique pour la fixation sur la structure d'assise, une matelassure (MA) reposant sur une surface supérieure de la base et un revêtement d'habillage (CF) recouvrant la matelassure, ledit système d'interface mécanique comprenant une interface mécanique arrière (16), sur une partie arrière du support (S), comprenant un premier logement (LG1) configuré pour loger le tube arrière (22) de manière verrouillable par le système de verrouillage, et une interface mécanique avant (17) sur une partie avant du support, configurée pour loger le tube avant (23), dans un deuxième logement (LG2),
- assemblage du coussin modulaire à ladite structure de siège par mise en oeuvre des étapes suivantes :
/A2/ mise en regard de l'interface mécanique avant (17) avec le tube avant (23) et insertion du tube avant dans le deuxième logement (LG2), et
/B2/ pivotement du support de garniture autour du tube avant (23) alors emboité dans le deuxième logement (LG2) de l'interface mécanique avant (17) jusqu'à une insertion du tube arrière (22) dans le premier logement (LG1) de l'interface mécanique arrière et verrouillage mécanique du tube arrière (22) dans le premier logement (LG1) par un système de verrouillage.

10. Procédé selon la revendication 9, dans lequel ledit ensemble comprend, outre, la structure d'assise, un dossier, et dans lequel le système de verrouillage comprend ledit dossier, et dans lequel le verrouillage du tube arrière (22) dans le premier logement (LG1) est obtenu, par la fixation du dossier sur la structure d'assise à l'état assemblé, et en particulier la fixation d'une structure de dossier sur la structure d'assise et/ou la fixation d'un élément de dossier tel qu'un coussin modulaire de dossier (CMD) sur la structure de dossier préalablement fixée à la structure d'assise, ledit dossier, en particulier la structure de dossier et/ou ledit élément de dossier en particulier le coussin modulaire de dossier (CMD) formant une butée interdisant la sortie du tube arrière (22) du premier logement (LG1), en interdisant le pivotement du coussin modulaire d'assise (CM) autour du tube avant (23).
